# EUROPÄISCHE PATENTSCHRIFT

(11) **EP 0 734 933 B1**
(45) Veröffentlichungstag und Bekanntmachung des Hinweises auf die Patenterteilung: **14.07.1999**
(21) Anmeldenummer: 96109142.8
(22) Anmeldetag: 01.12.1994
(51) Int. Cl.: B62B 3/18

(54) **Stapelbarer Einkaufswagen**
Nestable shopping trolley
Chariot d'achats emboîtables

(30) Priorität: 07.12.1993 DE 9318735 U; 19.02.1994 DE 9402744 U
(43) Veröffentlichungstag der Anmeldung: 02.10.1996
(62) Teilanmeldung aus: 94118932.6
(73) Patentinhaber: WANZL METALLWARENFABRIK GMBH, D-89336 Leipheim (DE)
(72) Erfinder: Eberlein, Herbert, 89347 Bubesheim (DE)

(56) Entgegenhaltungen:
- DE-A- 3 445 596
- DE-U- 8 508 238

## Beschreibung

Die Erfindung betrifft einen stapelbaren Einkaufswagen, mit einer Schiebeeinrichtung und mit einem Fahrgestell, das einen Korb trägt, dessen rückwärtiges Ende durch eine Klappe verschließbar ist, wobei an dem der Schiebeeinrichtung zugeordneten Ende des Einkaufswagens eine aus einer Nichtgebrauchslage in eine Gebrauchslage und umgekehrt bewegbare, zum Abstellen größerer Gegenstände bestimmte Ablage vorgesehen ist, die ein Schwenkteil und ein Abstellteil aufweist und wenigstens ein an der Ablage befindlicher Anschlag vorgesehen ist, der ein Herabfallen der Gegenstände nach rückwärts verhindert und wobei das Abstellteil in am Fahrgestell angeordneten, in Schieberichtung des Einkaufswagens sich erstreckenden Führungen schiebebeweglich geführt und das an, Fahrgestell um eine horizontale Achse schwenkbar angeordnete und wahlweise begrenzt anhebbar gelagerte Schwenkteil eine Querstrebe aufweist, an der sich das Abstellteil über Abschnitte abstützt und gelenkig mit der Querstrebe verbunden ist.

Bei Einkaufswagen dieser Art lassen sich z.B. Getränkekisten auf der herausgeklappten Ablage abstellen und transportieren. Bei einem bekannten, voll der Firma Clares Equipment Ltd. Großbritannien hergestellten und zum nächstliegenden Stand der Technik zählenden Einkaufswagen ist das Schwenkteil von oben betrachtet als ein im wesentlichen U-förmiges Teil gestaltet, dessen Schenkel als Stützen ausgebildet sind, die sich verschwenkbar am rückwärtigen Ende des Fahrgestelles an diesem abstützen und dessen die Stützen verbindende Querstrebe mit einem größtenteils ebenflächigen Abstellteil um eine horizontale Achse bewegbar verbunden ist, wobei das Abstellteil vorderendig mit Stützmitteln ausgestattet ist, die in Führungen schiebebeweglich abgestützt sind, welche sich in Schieberichtung des Einkaufswagens beidseitig entlang der Träger des Fahrgestelles erstrecken. Die Querstrebe des Schwenkteiles, die an das hintere Ende des Abstellteiles auf gleicher Höhe angrenzt, ist mittig nach unten gekröpft, um einen Handgriff zu bilden. Zu beiden Seiten des Handgriffes sind Anschläge an der Querstrebe angeschweißt, die zum weiteren Abstützen eines auf dem Abstellteil abgestellten Gegenstandes, beispielsweise einer Getränkekiste, bestimmt sind. Die Anschläge sind als separate Teile gestaltet, die in ihrer Form an den griechischen Buchstaben Omega erinnern, wobei sie mit ihren beiden freien Schenkeln an die Querstrebe angeschweißt sind. Sowohl die Anfertigung der Anschläge, als auch deren Befestigung am Schwenkteil sind aufwendig und deshalb teuer. Bei Massenartikeln, wie sie Einkaufswagen darstellen, bedeuten jedoch bereits geringe Mehrkosten einen nicht zu unterschätzenden Kostenfaktor, den es zu vermeiden gilt.

Zum Stand der Technik zählt ferner ein Einkaufswagen, der in der DE-U-85 08 238.4 beschrieben ist. Auch dieser Einkaufswagen weist eine an seiner Rückseite befindliche Ablage auf, die aus einem Schwenkteil und aus einem Abstellteil besteht, wobei im Gegensatz zum vorab beschriebenen Einkaufswagen das Abstellteil nicht in Führungen, sondern in einem bügelförmigen Halteteil schiebebeweglich geführt ist. Das Schwenkteil weist eine Querstrebe auf, die mit dem Abstellteil gelenkig verbunden und mit den beiden Streben oder Stützen verschweißt ist. Über der vierfach gebogenen Querstrebe ist eine weitere Querverstrebung vorgesehen, deren Enden seitliche Anschläge bilden. Die so gestaltete Querverstrebung ist ebenfalls mit den beiden Streben des Schwenkteiles verschweißt. Auch bei diesem Einkaufswagen ist das Schwenkteil als relativ teileaufwendiges und daher teueres Bauteil gestaltet, das zu seiner Herstellung viele Arbeitsgänge erfordert.

Die Aufgabe der Erfindung besteht darin, die Ablage eines gattungsgemäßen Einkaufswagens so weiterzuentwickeln, daß eine Senkung der Herstellkosten erreicht wird, ohne daß darunter die Qualität der Ablage leidet oder das sichere Abstellen von Gegenständen auf der Ablage beeinträchtigt wird.

Die gestellte Aufgabe läßt zwei voneinander unabhängige Lösungen entstehen.
Eine erste Lösung schlägt vor, den wenigstens einen Anschlag am Abstellteil vorzusehen und die Querstrebe unterhalb der für die Stützung des Abstellteiles bestimmten, am Abstellteil vorgesehenen Abschnitte anzuordnen.

Die zweite Lösung empfiehlt, den wenigstens einen Anschlag durch die Querstrebe zu bilden, um dann die Querstrebe oberhalb der genannten Abschnitte verlaufen zu lassen.

Durch das Abkanten oder winklige Nachobenformen des Abstellteiles gemäß der ersten Lösung übernimmt das Abstellteil zwei Funktionen. Es ist Stellfläche für abzustellende Gegenstände ebenso wie deren rückwärtiger Anschlag.
Läßt man die Querstrebe gemäß der zweiten Lösung oberhalb des Abstellteiles verlaufen, ist durch bevorzugtes Ausformen der Querstrebe zu einem Anschlag ein Abkanten oder Nachobenformen des Abstellteiles überflüssig. Bei dieser zweiten Lösung übernimmt nun die Querstrebe zwei Funktionen. Sie ist Stütze für das Abstellteil und gleichzeitig rückwärtiger Anschlag für auf der Ablage befindliche Gegenstände.
Da sowohl das Abstellteil als auch die Querstrebe imstande sind, die jeweils zusätzliche Funktion des wenigstens einen Anschlages zu übernehmen, erspart man sich in kostengünstiger Weise die gesonderte Herstellung von Anschlägen und das Anschweißen dieser Anschläge an der Ablage. Eine Senkung der Herstellkosten wird dadurch erzielt.
Ein weiterer Vorteil ist darin erkennbar, daß sich die Querstrebe bei beiden vorgeschlagenen Lösungen nicht im Bereich der Stellfläche des Abstellteiles befindet. Dadurch kann die Stellfläche eben gestaltet werden, so daß auf das Abstellteil aufgesetzte Gegenstände nicht wackeln. Dies erlaubt den sicheren Transport von auf der Ablage abgestellten Gegenständen.

Die Erfindung wird anhand einiger Ausführungsbeispiele näher erläutert. Es zeigt
- Fig. 1 bis Fig. 3: drei Einkaufswagen mit unterschiedlichen Fahrgestellen mit Ablage;
- Fig. 4: den in Fig. 1 dargestellten Einkaufswagen in räumlicher Darstellung;
- Fig. 5 und Fig. 6: zwei unterschiedlich gestaltete Ablagen von oben betrachtet;
- Fig. 7: zwei ineinandergeschobene Einkaufswagen entsprechend Fig. 2;
- Fig. 8 bis Fig. 10: Beispiele von Verbindungen zwischen dem Abstellteil und der Querstrebe.

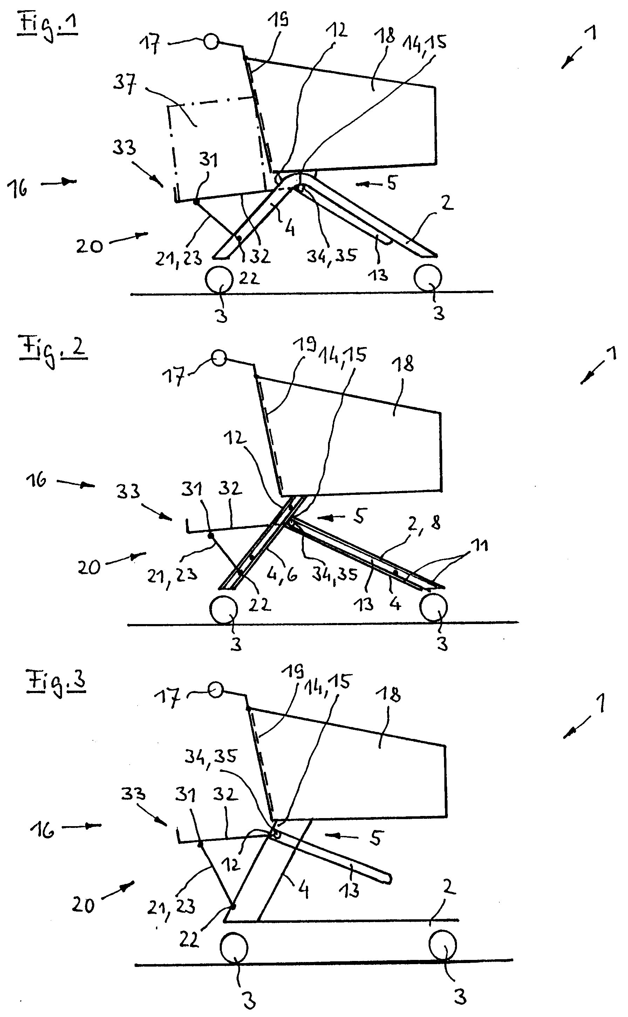

Die in den Fig. 1 bis 3 gezeigten Einkaufswagen 1 weisen folgende gemeinsame Merkmale auf: Ein mit Fahrrollen 3 ausgestattetes konisches Fahrgestell 2, das mit nach oben gerichteten, seitlich angeordneten Trägern 4 ausgestattet ist, die bevorzugt an ihrer höchsten Erhebung 5 einen Korb 18 tragen, der sich in Schieberichtung der Einkaufswagen 1 verjüngt. Das rückwärtige offene Ende des Korbes 18 ist in bekannter Weise durch eine schwenkbare Klappe 19 verschließbar, so daß es möglich ist, gleiche Einkaufswagen 1 platzsparend ineinanderzuschieben, also zu stapeln. Gewöhnlieh ist am Korb 18 eine Schiebeeinrichtung 17 in Form eines Handgriffes vorgesehen, wobei dieser auch am Fahrgestell 2 angeordnet sein kam. Am rückwärtigen Ende 16 eines jeden Einkaufswagens 1 ist eine aus einen, Schwenkteil 21 und aus einen, Abstellteil 32 gestaltete Ablage 20 vorgesehen, wobei das Schwenkteil 21 uni eine horizontale Achse 22 an, rückwärtigen Ende 16 des Fahrgestelles 2 begrenzt verschwenkbar gelagert ist und wobei die Lagerung der zum Schwenkteil 21 gehörenden Stützen 23 mit großzügigem Spiel so gewählt sein kann, daß sieh das Schwenkteil 21 auch eine gewisse Wegstrecke anheben und absenken läßt. Das Abstellteil 32 ist mit seinen, hinteren Ende 33 um eine horizontale Achse 31 verschwenkbar am Schwenkteil 21 angelenkt, während am vorderen Ende 34 des Abstellteiles 32 zwei nicht näher dargestellte Stützmittel 35, etwa Rollen, Vorsprünge und dergleichen vorgesehen sind, die in am Fahrgestell 2 vorgesehenen Führungen 13 schiebebeweglich gelagert sind, wobei sich die Führungen 13 in Schieberichtung des Einkaufswagens 1 erstrecken. Die Ablagen 20 sind bei allen drei Ausführungsbeispielen in der Gebrauchslage dargestellt. Beim Ausführungsbeispiel gemäß Fig. 1 ist als größerer Gegenstand eine auf dem Abstellteil 32 abgestellte Getränkekiste 37 eingezeichnet. Unterschiedlich gestaltet sind die Träger 4. Beim Ausführungsbeispiel nach Fig. 1 sind die Träger 4 in bekannter Weise aus nach oben gekrümmten einstückigen Rohren gestaltet, wie dies z.B. in der DE 30 43 599 C2 näher beschrieben ist.

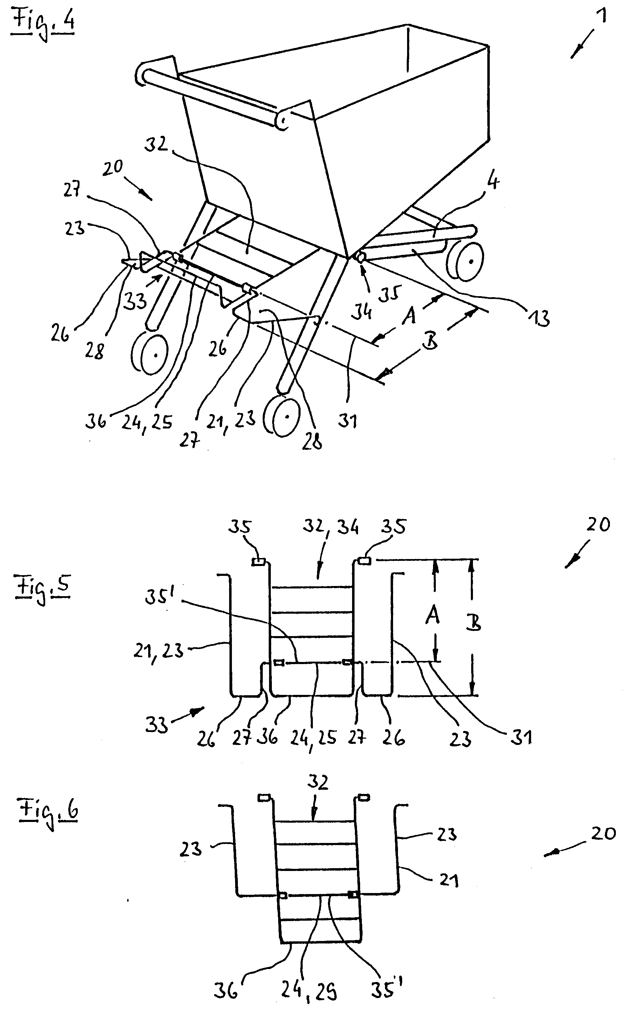

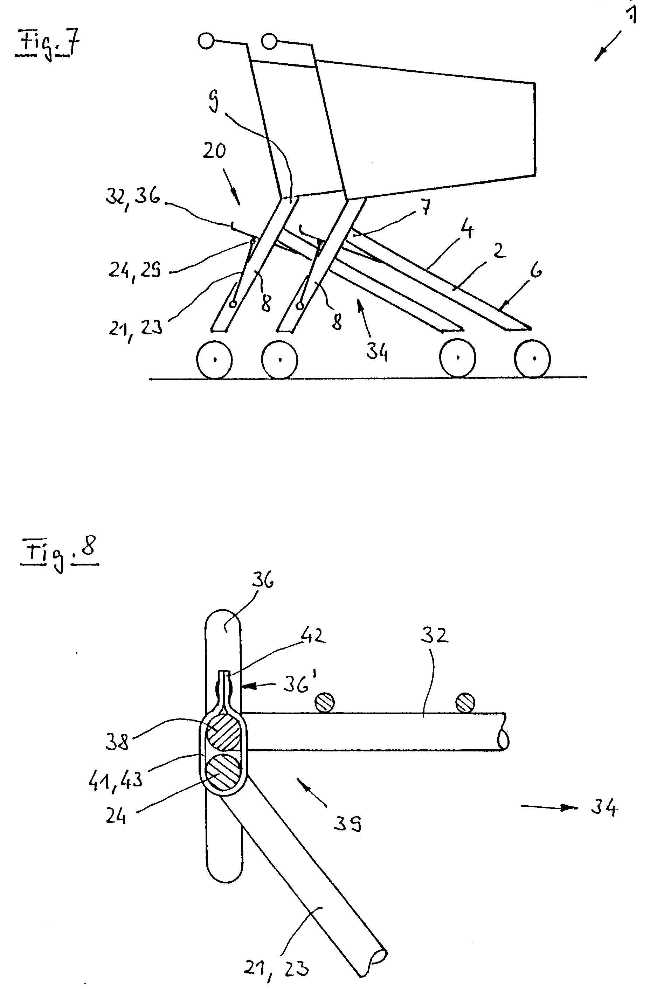

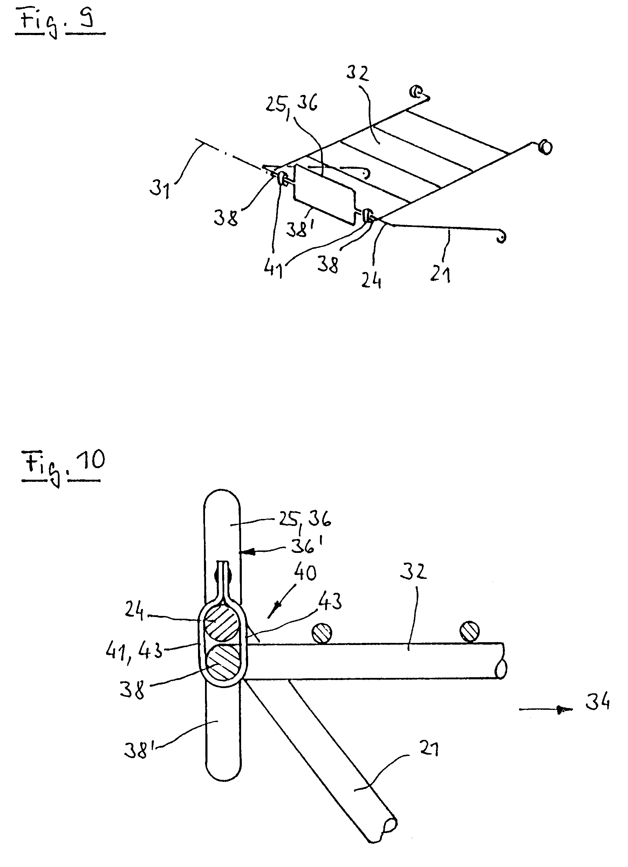

Beim Fahrgestell 2 gemäß dem in Fig. 2 gezeigten Ausführungsbeispiel sind die Träger 4 zweistückig gestaltet und aus paarweise angeordneten, parallel verlaufenden Drähten 11 gebildet, die durch Zwischenstücke auf Distanz gehalten sind, so daß dadurch die Führungen 13 für die bereits erwähnten Stützmittel 35 des Abstellteiles 32 gebildet sind. Die Träger 4 bestehen in diesem Beispiel aus einem vorderen und aus einem hinteren Trägerabschnitt 6, 8, wobei aus übereinander angeordneten Drähten 11 gebildete Träger 4 beispielsweise durch die EP 0 113 260 A2 bekannt sind. Beim Ausführungsbeispiel entsprechend Fig. 3 hingegen sind die Führungen 13 so angeordnet, wie sie in der DE 34 44 969.8 A1 gezeigt sind. Diese Ausführungsbeispiele sollen verdeutlichen, daß die erfindungsgemäße Lösung bei den unterschiedlichsten bekannten Einkaufswagen 1 anwendbar ist, wobei bei allen Ausführungsbeispielen das Schwenkteil 21 in Nichtgebrauchslage der Ablage 20 an der hinteren oberen Begrenzung 12 der Träger 4 altliegt, während die Ablage 20 gewöhnlich durch an den Führungen 13 befindlichen Anschlägen 15 gehalten werden, die mit den, Abstellteil 32 zusammenwirken, wobei andere Möglichkeiten der Begrenzung des Schwenkbereiches der Ablage 20 denkbar und auch bekannt sind. Die Ablagen 20, sowie die Fahrgestelle 2 sind so gestaltet und aufeinander abgestimmt, daß in bekannter Weise ein rückwärtiger Einkaufswagen 1 in einen vorausbefindlichen Einkaufswagen 1 einschiebbar ist, wobei eine in Gebrauchslage befindliche Ablage 20 eines vorausbefindlichen Einkaufswagens 1 vom rückwärtigen Einkaufswagen 1 von selbst in die Nichtgebrauchslage gedrückt wird.

Fig. 4 zeigt den in Fig. 1 dargestellten Einkaufswagen 1 in räumlicher Darstellung. Die Ablage 20 befindet sich in Gebrauchslage. Das Schwenkteil 21 besteht aus zwei Stützen 23, die durch mindestens eine Querstrebe 24 verbunden sind. Die mehrfach gebogene Querstrebe 24 führt unter dem Abstellteil 32 hindurch, bzw. das Abstellteil 32 liegt auf der Querstrebe 24 auf und ist an der Unterseite des Abstellteiles 32 bevorzugt an zwei Stellen um eine horizontale Achse 31 verschwenkbar an der Querstrebe 24 angelenkt. Bedingt durch die nach oben gekrümmten Träger 4 ist es von Vorteil, wenn die Querstrebe 24 aus drei Abschnitten besteht und zwar aus einem mittleren Abschnitt 25, der zum Anlenken an das Abstellteil 32 bestimmt ist und aus zwei äußeren Abschnitten 26, die zu beiden Seiten des Abstellteiles 32 verlaufen und in die Stützen 23 münden. Dabei ist der mittlere Abschnitt 25 der Querstrebe 24 näher (Maß A) am vorderen Ende 34 des Abstellteiles 32 angeordnet, als die äußeren Abschnitte 26 (Maß B). Die Stützen 23 und die äußeren Abschnitte 26, sowie der mittlere Abschnitt 25 bilden zusammen mit zwei Verbindungsabschnitten 27 zwei links und rechts des Abstellteiles 32 befindliche Einschnitte 28. Diese Einschnitte 28 bilden je einen Raum für je einen Abschnitt der Träger 4 eines in einen vorausbefindlichen Einkaufswagen 1 eingeschobenen rückwärtigen Einkautswagens 1, wobei sich dann die Ablage 20 des vorausbefindlichen Einkaufswagens 1 in der Nichtgebrauchslage befindet. Die eben beschriebene Art der Gestaltung des Schwenkteiles 21 läßt Fahrgestelle 2 zu, deren Träger 4, wie auch in Fig. 1 gezeigt, nach oben gekrümmt sind. Da die Träger 4 eines rückwärtigen Einkaufswagens 1 bedingt durch die Einschnitte 28, nicht an die Querstrebe 24 der Ablage 20 eines vorausbefindlichen Einkaufswagens 1 anstoßen, lassen sich dadurch gleiche Einkaufswagen 1 äußerst platzsparend ineinanderschieben. Das Abstellteil 32 ragt über den mittleren Abschnitt 25 der Querstrebe 24 nach rückwärts hinaus. Das bevorzugt als Gitterrost oder als Kunststoffteil gestaltete Abstellteil 32 ist an seinem hinteren Ende 33 nach oben so abgekantet bzw. winklig nach oben geformt, daß wenigstens ein Anschlag 36 gebildet ist, welcher verhindert, daß ein auf der Ablage 20 befindlicher Gegenstand nach rückwärts von dem bevorzugt nach hinten geneigten Abstellteil 32 herabfüllt. Es ist zweckmäßig, an, Anschlag 36 zusätzlich eine Griffzone vorzusehen, so daß das Abstellteil 32 bequem von Hand bewegbar ist. Im vorderen Bereich der Träger 4 sind in bekannter Weise Führungen 13 vorgesehen, die nach vorne geneigt und in Schieberichtung des Einkaufswagens 1 angeordnet sind und die in bekannter Weise der schiebebeweglichen Aufnahme von Stützmitteln 35 dienen, welche am vorderen Ende 34 des Abstellteiles 32 und an dessen beiden Seiten angeordnet sind und in die Führungen 13 eingreifen.

In einer Draufsicht zeigt Fig. 5 eine Ablage 20, wie sie in den Figuren 1 und 4 vorgeschlagen wurde. Man erkennt das zwischen den Stützen 23 des Schwenkteiles 21 anzuordnende Abstellteil 32, sowie die zu beiden Seiten des Abstellteiles 32 befindlichen äußeren Abschnitte 26 der Querstrebe 24, ferner die Verbindungsabschnitte 27 der Querstrebe 24, die von den äußeren Abschnitten 26 zum mittleren Abschnitt 25 führen, der wiederum bevorzugt an der Unterseite des Abstellteiles 32 angeordnet und an einen am Abstellteil 32 vorgesehenen Querstab 35' oder an zwei am Abstellteil 32 angeordneten und geeigneten Aufnahmen um die horizontale Achse 31 verschwenkbar angeordnet ist. Am hinteren Ende 33 des Abstellteiles 32 befindet sich der nach oben gerichtete Anschlag 36, während am vorderen Ende 34 des Abstellteiles 32 die von den Seiten des Abstellteiles 32 wegragenden Stützmittel 35 erkennbar sind.

Ebenfalls in einer Draufsicht zeigt Fig. 6 eine Ablage 20, die bei einem Einkaufswagen 1 gemäß den Figuren 2 und 7 verwendbar ist. Bei diesem Ausführungsbeispiel ist die Querstrebe 24 des Schwenkteiles 21 als geradliniger Abschnitt 29 gestaltet, der auf kürzestein Weg die Stützen 23 verbindet. Alle weiteren Einzelheiten sind wie in Fig. 5 beschrieben vorgesehen und ausgebildet. Auf die erwähnten Einschnitte 28 am Schwenkteil 21, vgl. Fig. 4 und 5, kann hier dann verzichtet werden, wenn beim Fahrgestell 2 das obere Ende 7 des vorderen Trägerabschnittes 6 niedriger angeordnet ist, als das obere Ende 9 des hinteren Trägerabschnittes 8, vgl. Fig. 7. Auch bei diesem Ausführungsbeispiel ist die Querstrebe 24 bevorzugt an einen, an, Abstellteil 32 befindlichen Querstab 35' angelenkt.

Das vorteilhafte Zusammenwirken der konstruktiven Merkmale von Fahrgestell 2 und Ablage 20 gemäß den Ausführungsbeispielen nach Fig. 2 und 6 wird anhand der Zeichnung gemäß Fig. 7 deutlich. Das Beispiel zeigt zwei ineinandergeschobene Einkaufswagen 1 gemäß Fig. 2, wobei sich die Ablagen 20 der beiden Einkaufswagen 1 in der Nichtgebrauchslage befinden. Die oberen Enden 7 der vorderen Trägerabschnitte 6 der Träger 4 sind, gemessen vom Fußboden, tiefer angeordnet, als die oberen Enden 9 der hinteren Trägerabschnitte 8. Der geradlinige Abschnit 29 der Querstrebe 24 eines vorausbefindlichen Einkaufswagens 1 führt oberhalb des vorderen Trägerabschnittes 6 eines rückwärtigen Einkaufswagens 1 von einer Stütze 23 zur anderen. Im Gegensatz zu der in Fig. 4 und 5 gezeigten Ablage 20, bei der sich die beiden äußeren Abschnitte 26 des Schwenkteiles 21 in etwa auf Höhe des Anschlage 36 befinden, ist der geradlinige Abschnitt 29 der Querstrebe 24, bzw. des Schwenkteiles 21 in einem Abstand zum Anschlag 36 des Abstellteiles 32 angeordnet. Der geradlinige Abschnitt 29 der Querstrebe 24 ist näher am vorderen Ende 34 des Abstellteiles 32 angeordnet als der Anschlag 36.

Es bleibt anzumerken, daß bei Einkaufswagen 1 gemäß dem Ausführungsbeispiel nach Fig. 3 entweder eine Ablage 20 gemäß Fig. 5, oder eine solche entsprechend Fig. 6 verwendbar ist. Welche der beiden Ablagen 20 auswählbar ist, hängt davon ab, wie hoch das rückwärtige Ende 14 der Führungen 13, vgl. Fig. 3, angeordnet ist. Ferner ist es möglich, das Abstellteil 32 unterhalb des mittleren Abschnittes 25 oder des geradlinigen Abschnittes 29 der Querstrebe 24 anzuordnen und mit den vorab beschriebenen technischen Mitteln mit dem Schwenkteil 21 oder den Stützen 23 gelenkig zu verbinden. Aus Stabilitätsgründen ist jedoch ein Abstützen des Abstellteiles 32 auf dem mittleren Abschnitt 25 oder auf dem geradlinigen Abschnitt 29 der Querstrebe 24 zu empfehlen. Schließlich ist es möglich, anstelle von zwei, bevorzugt an den Trägern 4 angeordneten Führungen 13 lediglich eine Führung vorzusehen, die als U-förmiges Teil gestaltet, mit ihren nach oben gerichteten Schenkeln bevorzugt an einer Querstrebe des Fahrgestelles 2 oder an der Unterseite des Korbes 18 befestigt ist und die lichte Weite der Schenkel so gewählt ist, daß das Abstellteil 32 zwischen den Schenkeln angeordnet und auf dem die Schenkel verbindenden Abschnitt aufliegend, verschiebbar gelagert ist. Dabei können die Stützmitel 35 entweder am Abstellteil 32 oder am U-förmigen Teil vorgesehen sein.

Fig. 8 zeigt in einem Abschnitt die gelenkige Verbindung von Schwenkteil 21 und Abstellteil 32. Man erkennt einen Teil einer der beiden Stützen 23 des Schwenkteiles 21 sowie die Querstrebe 24 im Schnitt. Die Querstrebe 24 verläuft unterhalb eines Abschnittes 38 des Abstellteiles 32, das sich in Schieberichtung des Einkaufswagens 1 erstreckt. Die somit an der Unterseite 39 des Abstellteiles 32 angeordnete Querstrebe 24 liegt am Abschnitt 38, bzw. an beiden Abschnitten 38 an. Die beiden Gelenke 41, welche die bewegbare Verbindung von Schwenkteil 21 und Abstellteil 32 erlauben, sind durch je ein Flachband gebildet. Jedes Flachband umschlingt einen Abschnitt 38 und einen Teil der Querstrebe 24. Die freien Enden 42 der beiden Flachbänder sind in, Beispiel nach oben gerichtet und miteinander vernietet. Sowohl das Schwenkteil 21, als auch das Abstellteil 32 sind, wie bei allen anderen Ausführungssbeispielen, in üblicher Weise aus Drähten gefertigt. Dies erlaubt in äußerst zweckmäßiger Weise die Bildung von aus Flachbändern bestehenden Gelenken 41. Man erkennt in der Zeichnung ferner den durch den mittleren Abschnitt 25 gebildeten Handgriff, vgl. Fig. 4, den Anschlag 36 sowie zwei Querstäbe des Abstellteiles 32, welche die Längsseiten des Abstellteiles 32 verbinden.

Bei dem, in den Figuren 9 und 10 gezeigten Ausführungsbeispielen verläuft die Querstrebe 24 oberhalb der beiden Abschnitte 38 des Abstellteiles 32. Die Querstrebe 24 liegt auf den beiden Abschnitten 38 auf und ist ebenfalls mit Hilfe von zwei Gelenken 41 mit dem Abstellteil 32 verbunden. Die Gelenke 41 sind wieder durch die erwähnten Flachbänder gebildet, so daß das Schwenkteil 21 und das Abstellteil 32 um eine horizontale Achse 31 bewegbar miteinander verbunden sind. Bei diesem Ausführungsbeispiel wird der Anschlag 36 durch Nachobenkröpfen des mittleren Abschnittes 25 der Querstrebe 24 und der mögliche Handgriff durch einen nach unten gekröpften mittigen Abschnitt 38' des Abstellteiles 32 gebildet, der die beiden Abschnitte 38 verbindet. Bei diesem Ausführungsbeispiel liegt die Querstrebe 24 an der Oberseite 40 des Abstellteiles 32 auf.
Es erweist sich bei allen gezeigten Ausführungsbeispielen als zweckmäßig, die Anschlagflächen 36' der Anschläge 36 bevorzugt näher zum vorderen Ende 34 des Abstellteiles 32 anzuordnen, als die entgegengesetzt angeordneten hinteren Begrenzungen der Querstrebe 24 und/oder des Abstellteiles 32. Dadurch wird eine satte Anlage jener vertikalen Wand eines auf der Ablage 20 befindlichen Gegenstandes 48 erreicht, die an den Anschlägen 36 anliegt. Anstelle von zwei am Abstellteil 32 befindlichen Abschnitten 38 kann auch nur ein Abschnitt 38 vorgesehen sein, der die Breite des Abstellteiles 32 durchmißt. Die Verbindung dieses Abschnittes 38 mit der Querstrebe 24 erfolgt, wie vorab beschrieben, ebenfalls über wenigstens ein, gewöhnlich über zwei Gelenke 41. Schließlich ist es möglich, entweder an der Querstrebe 24, oder am Abstellteil 32 anstelle eines Anschlages 36 zwei solcher Anschläge 36 vorzusehen oder anzuformen.

## Patentansprüche

1. Stapelbarer Einkaufswagen (1), mit einer Schiebeeinrichtung (17) und mit einen) Fahrgestell (2), das einen Korb (18) trägt, dessen rückwärtiges Ende durch eine Klappe (19) verschließbar ist, wobei an dem der Schiebeeinrichtung (17) zugeordneten Ende des Einkaufswagens (1) eine aus einer Nichtgebrauchslage in eine Gebrauchslage und umgekehrt bewegbare, zum Abstellen größerer Gegenstände (48) bestimmte Ablage vorgesehen ist, die ein Schwenkteil (21) und ein Abstellteil (32) aufweist und wenigstens ein an der Ablage (20) befindlicher Anschlag (36) vorgesehen ist, der ein Herabfallen der Gegenstände (48) nach rückwärts verhindert und wobei das Abstellteil (32) in am Fahrgestell (2) angeordneten, in Schieberichtung des Einkaufswagens (1) sich erstreckenden Führungen (13) schiebebeweglich geführt und das am Fahrgestell (2) um eine horizontale Achse (22) schwenkbar angeordnete und wahlweise begrenzt anhebbar gelagerte Schwenkteil (21) eine Querstrebe (24) aufweist, an der sich das Abstellteil (32) über Abschnitte (38) abstützt und gelenkig mit der Querstrebe (24) verbunden ist, dadurch **gekennzeichnet,** daß der wenigstens eine Anschlag (36) am Abstellteil (32) vorgesehen ist und daß die Querstrebe (24) unterhalb der Abschnitte (38) verläuft.

2. Einkaufswagen nach Anspruch 1, dadurch **gekennzeichnet,** daß die Querstrebe (24) durch einen geradlinigen Abschnitt (29) gebildet ist, der die Stützen auf kürzestem Weg verbindet und daß der geradlinige Abschnitt (29) näher am vorderen Ende (34) des Abstellteiles (32) angeordnet ist als der Anschlag (36).

3. Einkaufswagen nach Anspruch 1, dadurch **gekennzeichnet,** daß die Querstrebe (24) einen mittleren Abschnitt (25) und zwei äußere Abschnitte (26) aufweist, wobei der mittlere Abschnitt (25) mit dem Abstellteil (32) verbunden ist und die äußeren Abschnitte (26) zu beiden Seiten des Abstellteiles (32) so angeordnet sind, daß diese vom vorderen Ende (34) des Abstellteiles (32) weiter entfernt sind als der mittlere Abschnitt (25).

4. Einkaufswagen nach einem der Ansprüche 1 bis 3, dadurch **gekennzeichnet,** daß der wenigstens eine Anschlag (36) weiter von vorderen Ende (34) des Abstellteiles (32) angeordnet ist als die Querstrebe (24).

5. Einkaufswagen nach einem der Ansprüche 1 bis 4, dadurch **gekennzeichnet,** daß das Abstellteil (32) zur Bildung des wenigstens einen Anschlages (36) nach oben abgekantet oder winklig nach oben geformt ist.

6. Einkaufswagen nach einem der Ansprüche 1 bis 5, dadurch **gekennzeichnet,** daß die Querstrebe (24) mit einem am Abstellteil (32) befindlichen Querstab (35') verbunden ist.

7. Einkaufswagen nach einem der Ansprüche 1 bis 6, dadurch **gekennzeichnet,** daß am Anschlag (36) eine Griffzone vorgesehen ist.

8. Stapelbarer Einkaufswagen (1), mit einer Schiebeeinrichtung (17) und mit einem Fahrgestell (2), das einen Korb (18) trägt, dessen rückwärtiges Ende durch eine Klappe (19) verschließbar ist, wobei an dem der Schiebeeinrichtung (17) zugeordneten Ende des Einkaufswagens (1) eine aus einer Nichtgebrauchslage in eine Gebrauchslage und umgekehrt bewegbare, zum Abstellen größerer Gegenstände (48) bestimmte Ablage vorgesehen ist, die ein Schwenkteil (21) und ein Abstellteil (32) aufweist und wenigstens ein an der Ablage (20) befindlicher Anschlag (36) vorgesehen ist, der ein Herabfallen der Gegenstände (48) nach rückwärts verhindert und wobei das Abstellteil (32) in am Fahrgestell (2) angeordneten, in Schieberichtung des Einkaufswagens (1) sich erstreckenden Führungen (13) schiebebeweglich geführt und das am Fahrgestell (2) um eine horizontale Achse (22) schwenkbar angeordnete und wahlweise begrenzt anhebbar gelagerte Schwenkteil (21) eine Querstrebe (24) aufweist, an der sich das Abstellteil (32) über Abschnitte (38) abstützt und gelenkig mit der Querstrebe (24) verbunden ist, dadurch **gekennzeichnet,** daß der wenigstens eine Anschlag (36) durch die Querstrebe (24) gebildet ist und daß die Querstrebe (24) oberhalb der Abschnitte (38) verläuft.

9. Einkaufswagen nach Anspruch 1 oder 8, dadurch **gekennzeichnet,** daß die Anschläge (36) Anschlagflächen (36') aufweisen und daß die Anschlagflächen (36') näher am vorderen Ende (34) des Abstellteiles (32) angeordnet sind, als die entgegengesetzt angeordneten hinteren Begrenzungen der Querstrebe (24).

## Claims

1. A stackable shopping trolley (1), having a pushing arrangement (17) and having a wheel frame (2) which bears a basket (18) whose rear end is closeable by a flap (19), a rack ― movable from an out-of-use position into an in-use position and vice-versa and for the depositing of relatively large objects (48) ― being provided at the shopping-trolley end associated with the pushing arrangement (17), which rack has a pivot part (21) and a deposit part (32), and at least one stop (36) located on the rack (20) being provided and preventing the objects (48) falling off to the rear, and the deposit part (32) being guided in a slideable manner in guides (13) which extend in the advancing direction of the shopping trolley (1) and which are arranged on the wheel frame (2), and the pivot part (21) ― which is arranged on the wheel frame (2) so as to be pivotable about a horizontal axis (22) and which is mounted thereon so as to be raisable to a limited extent at will ― having a transverse bar (24) on which the deposit part (32) is supported via portions (38) and is connected to the transverse bar (24) in an articulated manner, characterised in that the at least one stop (36) is provided on the deposit part (32) and in that the transverse bar (24) extends below the portions (38).

2. A shopping trolley in accordance with Claim 1, characterised in that the transverse bar (24) is formed by a rectilinear portion (29) which connects the supports in the shortest manner, and in that the rectilinear portion (29) is arranged closer than the stop (36) to the front end (34) of the deposit part (32).

3. A shopping trolley in accordance with Claim 1, characterised in that the transverse bar (24) has a middle portion (25) and two outer portions (26), the middle portion (25) being connected to the deposit part (32) and the outer portions (26) being arranged on both sides of the deposit part (32) in such a manner that they are further away than the central portion (25) from the front end (34) of the deposit part (32).

4. A shopping trolley in accordance with any one of Claims 1 to 3, characterised in that the at least one stop (36) is arranged further than the transverse bar (24) from the front end (34) of the deposit part (32).

5. A shopping trolley in accordance with any one of Claims 1 to 4, characterised in that to form the at least one stop (36), the deposit part (32) is bent upwards or is fashioned to extends upwards at an angle.

6. A shopping trolley in accordance with any one of Claims 1 to 5, characterised in that the transverse bar (24) is connected to a transverse rod (35') located on the deposit part (32).

7. A shopping trolley in accordance with any one of Claims 1 to 6, characterised in that a gripping zone is provided on the stop (36).

8. A stackable shopping trolley (1), having a pushing arrangement (17) and having a wheel frame (2) which bears a basket (18) whose rear end is closeable by a flap (19), a rack ― movable from an out-of-use position into an in-use position and vice-versa and intended for the depositing of relatively large objects (48) ― being provided at the shopping-trolley end associated with the pushing arrangement (17), which rack has a pivot part (21) and a deposit part (32), and at least one stop (36) located on the rack (20) being provided and preventing the objects (48) falling off to the rear, and the deposit part (32) being guided in a slideable manner in guides (13) which extend in the advancing direction of the shopping trolley (1) and which are arranged on the wheel frame (2), and the pivot part (21) ― which is arranged on the wheel frame (2) so as to be pivotable about a horizontal axis (22) and which is mounted thereon so as to be raisable to a limited extent at will ― having a transverse bar (24) on which the deposit part (32) is supported via portions (38) and is connected to the transverse bar (24) in an articulated manner, characterised in that the at least one stop (36) is formed by the transverse bar (24) and in that the transverse bar (24) extends above the portions (38).

9. A shopping trolley in accordance with Claim 1 or 8, characterised in that the stops (36) have stop faces (36') and in that the stop faces (36') are arranged closer than the opposite-arranged rear boundaries of the crossbar (24) to the front end (34) of the deposit part (32).

## Revendications

1. Chariot à provisions emboîtable (1), avec un dispositif de poussée (17) et avec un châssis (2) qui porte un panier (18) dont l'extrémité arrière peut être fermée par un abattant (19), un casier destiné à recevoir des objets (48) de plus grande taille, qui peut être déplacé d'une position de non utilisation dans une position d'utilisation et vice-versa, étant prévu à l'extrémité du chariot à provisions (1) qui est associée au dispositif de poussée (17), casier qui présente une partie pivotante (21) et une partie de dépose (32), et au moins une butée (36) se trouvant sur le casier (20) étant prévue, butée qui empêche les objets (48) de tomber vers l'arrière, et la partie de dépose (32) étant guidée à coulissement dans des guides (13) disposés sur le châssis (2) et s'étendant dans la direction de poussée du chariot à provisions (1), et la partie pivotante (21), disposée sur le châssis (2) à pivotement autour d'un axe horizontal (22) et optionnellement montée avec une possibilité limitée de relèvement, présentant une entretoise (24), contre laquelle la partie de dépose (32) s'appuie par des tronçons (38), en étant reliée en articulation à l'entretoise (24), **caractérisé** en ce qu'au moins une butée (36) est prévue sur la partie de dépose (32), et en ce que l'entretoise (24) s'étend en dessous des tronçons (38).

2. Chariot à provisions selon la revendication 1, **caractérisé** en ce que l'entretoise (24) est formée par un tronçon rectiligne (29), qui relie les montants de soutien par la voie la plus courte, et en ce que le tronçon rectiligne (29) est disposé plus près de l'extrémité avant (34) de la partie de dépose (32) que la butée (36).

3. Chariot à provisions selon la revendication 1, **caractérisé** en ce que l'entretoise (24) présente un tronçon central (25) et deux tronçons extérieurs (26), le tronçon central (25) étant relié à la partie de dépose (32) et les tronçons extérieurs (26) étant disposés de part et d'autre de la partie de dépose (32) de telle sorte qu'ils sont plus éloignés de l'extrémité avant (34) de la partie de dépose (32) que le tronçon central (25).

4. Chariot à provisions selon une des revendications 1 à 3, **caractérisé** en ce que la ou les butées (36) est disposée plus loin de l'extrémité avant (34) de la partie de dépose (32) que l'entretoise (24).

5. Chariot à provisions selon une des revendications 1 à 4, **caractérisé** en ce que la partie de dépose (32), afin de former la ou les butées (36), est repliée vers le haut ou formée en angle vers le haut.

6. Chariot à provisions selon une des revendications 1 à 5, **caractérisé** en ce que l'entretoise (24) est reliée à une barre transversale (35') se trouvant sur la partie de dépose (32).

7. Chariot à provisions selon une des revendications 1 à 6, **caractérisé** en ce qu'une zone de préhension est prévue sur la butée (36).

8. Chariot à provisions emboîtable (1), avec un dispositif de poussée (17) et avec un châssis (2) qui porte un panier (18) dont l'extrémité arrière peut être fermée par un abattant (19), un casier destiné à recevoir des objets (48) de plus grande taille, qui peut être déplacé d'une position de non utilisation dans une position d'utilisation et vice-versa, étant prévu à l'extrémité du chariot à provisions (1) qui est associée au dispositif de poussée (17), casier qui présente une partie pivotante (21) et une partie de dépose (32), et au moins une butée (36) se trouvant sur le casier (20) étant prévue, butée qui empêche les objets (48) de tomber vers l'arrière, et la partie de dépose (32) étant guidée à coulissement dans des guides (13) disposés sur le châssis (2) et s'étendant dans la direction de poussée du chariot à provisions (1), et la partie pivotante (21), disposée sur le châssis (2) à pivotement autour d'un axe horizontal (22) et optionnellement montée avec une possibilité limitée de relèvement, présentant une entretoise (24), contre laquelle la partie de dépose (32) s'appuie par des tronçons (38), en étant reliée en articulation à l'entretoise (24), **caractérisé** en ce que la ou les butées (36) sont formées par l'entretoise (24), et en ce que l'entretoise (24) s'étend au-dessus des tronçons (38).

9. Chariot à provisions selon la revendication 1 ou 8, **caractérisé** en ce que les butées (36) présentent des faces de butée (36'), et en ce que les faces de butée (36') sont disposées plus près de l'extrémité avant (34) de la partie de dépose (32) que les délimitations arrière, disposées à l'opposé, de l'entretoise (24).
